(19) Europäisches Patentamt / European Patent Office / Office européen des brevets

(11) **EP 4 394 485 B1**

(12) **FASCICULE DE BREVET EUROPEEN**

(45) Date de publication et mention de la délivrance du brevet:
**29.04.2026 Bulletin 2026/18**

(21) Numéro de dépôt: **23220441.2**

(22) Date de dépôt: **28.12.2023**

(51) Classification Internationale des Brevets (IPC):
***G02B 27/01*** *(2006.01)*

(52) Classification Coopérative des Brevets (CPC):
**G02B 27/0172;** G02B 2027/0174

(54) **DISPOSITIF DE PROJECTION D'UNE IMAGE FORMÉE PAR UN ÉCRAN**

VORRICHTUNG ZUM PROJIZIEREN EINES BILDES, DAS VON EINEM BILDSCHIRM GEBILDET WIRD

DEVICE FOR PROJECTING AN IMAGE FORMED BY A SCREEN

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **29.12.2022 FR 2214637**

(43) Date de publication de la demande:
**03.07.2024 Bulletin 2024/27**

(73) Titulaire: **Commissariat à l'Energie Atomique et aux Energies Alternatives**
**75015 Paris (FR)**

(72) Inventeur: **MARTINEZ, Christophe**
**38054 GRENOBLE cedex 09 (FR)**

(74) Mandataire: **INNOV-GROUP**
**209 Avenue Berthelot**
**69007 Lyon (FR)**

(56) Documents cités:
**EP-A1- 2 960 715    WO-A1-2019/191778**

**Description**

## DOMAINE TECHNIQUE

Le domaine technique de l'invention concerne un écran directif et son utilisation dans un dispositif de projection d'une image sur un œil, par exemple dans des applications de type réalité augmentée.

## ART ANTERIEUR

Les dispositifs portables de réalité augmentée, tels que les lunettes, permettent d'observer une scène réelle tout en visualisant des informations complémentaires. Ce type de dispositif est fréquemment basé sur des micro-écrans, permettant de former une image à proximité immédiate d'un œil d'un utilisateur. De tels micro-écrans peuvent par exemple être intégrés à une lunette. Un système optique, comportant un jeu de lentilles, permet la perception d'une image nette par l'œil.

Le brevet US9632317, ainsi que la publication Martinez « See-trough holographic retinal projection display concept », Optica, Vol. 5 N° 10, oct. 2018, décrivent un dispositif permettant une projection, sur la rétine d'un œil, sans écran ni système optique. Le dispositif comporte un circuit optique intégré transparent composé d'un réseau de guides de lumière nanométriques, d'un réseau d'électrodes et d'un film holographique. Un tel dispositif est compact, et permet d'obtenir un champ de vision étendu. De plus, cela permet de ne pas utiliser de système optique volumineux et de conception complexe.

Les guides de lumière permettent de définir un ensemble de points d'émission sur le film holographique, chaque point étant susceptible d'être illuminé par une lumière extraite d'un guide de lumière. L'ensemble de points d'émission est subdivisé en différents sous-ensembles, chaque sous-ensemble comportant des points d'émission répartis, le plus aléatoirement possible, sur le film holographique. Les points d'émission d'un même sous-ensemble peuvent être simultanément illuminés par les différents guides de lumière. Sous l'effet de l'illumination, chaque point d'émission du même sous-ensemble émet une onde lumineuse se propageant selon une même direction jusqu'à la pupille de l'œil, de façon à former un point lumineux unique au niveau de la rétine. De cette façon, chaque sous-ensemble de points d'émission permet une formation d'un pixel de l'image perçue par l'utilisateur. Une image peut être formée en illuminant successivement différents sous-ensembles de points, de façon à former une image comportant un nombre élevé de pixel.

Une telle configuration permet de former un dispositif très compact. Toutefois, cela suppose un recours à un grand nombre de sources laser différentes.

WO2019/191778 décrit un dispositif permettant de former des faisceaux lumineux dans une direction prédéterminée. D2 décrit par exemple le recours à une lentille diffractive, couplée à une matrice d'émetteurs de lumière, pour former un faisceau collimaté se propageant selon une direction souhaitée

D2 décrit un dispositif permettant de former des faisceaux lumineux dans une direction prédéterminée. Dans le passage cité par l'examinateur, D2 décrit le recours à une lentille diffractive, couplée à une matrice d'émetteurs (laser, diodes) pour former un faisceau collimaté se propageant selon une direction souhaitée

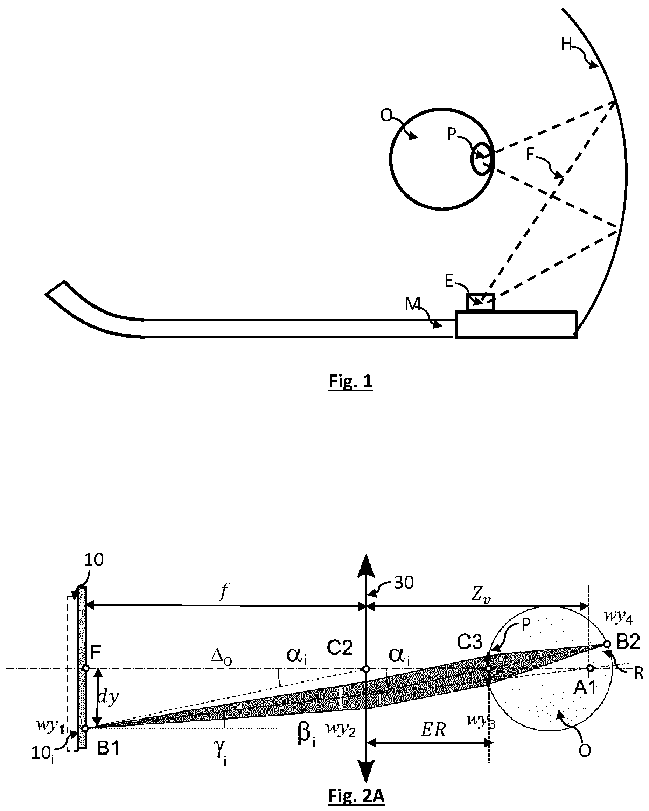

D'autres technologies ont été décrites, permettant de projeter une image sur un œil à l'aide d'un dispositif compact. Le brevet US10254547, décrit par exemple une lunette comportant un dispositif de projection d'une image virtuelle. Le principe de fonctionnement est schématisé sur la figure 1. Un émetteur de lumière E est disposé sur la monture M d'une lunette. L'émetteur de lumière E génère des faisceaux lumineux F se propageant vers un réflecteur holographique H. Le réflecteur holographique H est formé sur le verre de la lunette. Il est configuré pour réfléchir chaque faisceau lumineux vers la pupille P d'un œil O d'un utilisateur. L'émetteur de lumière est formé par une source de lumière couplée à un miroir mobile. Le miroir mobile est déplacé, de façon à former successivement des faisceaux lumineux balayant le réflecteur holographique. Ainsi, l'utilisateur perçoit des faisceaux lumineux réfléchis, de différentes directions angulaires. Lorsque l'intensité de chaque faisceau est modulée durant le balayage, l'utilisateur perçoit une image.

D'autres documents décrivent des configurations selon lesquelles un faisceau lumineux effectue un balayage d'un réflecteur holographique. Citons par exemple US2019/0285897 ou US20180299680.

Un inconvénient des configurations à balayage est que la boîte à œil est de faible dimension. Une boîte à œil, usuellement désignée par le terme anglosaxon « Eye box », désigne un volume dans lequel l'œil peut être déplacé pour percevoir une image nette. Le déplacement de l'œil peut être dynamique, lors de la rotation de l'œil qui balaie le champ de vision. Il peut également être variable d'un utilisateur à un autre du fait des écarts entre les distances inter-pupillaires. Avec une Eye Box de faible dimension, une dispositif peut convenir à un utilisateur mais pas à un autre, par exemple si les deux utilisateurs ont des distances inter-pupillaires différentes.

Un autre inconvénient est lié au recours à un système mécanique permettant d'effectuer le balayage. Le recours à un système mécanique de balayage et à des composants mobiles accroît la complexité et le coût du dispositif.

Les inventeurs proposent une configuration alternative aux dispositifs de projection à balayage précédemment cités. L'objectif est de proposer une solution sans composant mobile, tout en améliorant le confort d'utilisation, en augmentant la taille de la boîte à œil.

## EXPOSE DE L'INVENTION

Un objet de l'invention est un dispositif de projection d'une image sur un œil, le dispositif comportant :

- un émetteur de lumière, configuré pour émettre des ondes lumineuses respectivement selon différents axes d'émission ;
- un combineur optique, optiquement couplé à l'émetteur de lumière, et configuré pour former, à partir de chaque onde lumineuse émise par l'émetteur de lumière, une onde lumineuse collimatée se propageant vers la pupille de l'œil ;

le dispositif étant caractérisé en ce que :

- le combineur présente un plan focal objet ;
- l'émetteur de lumière comporte un écran directif, comprenant différents pixels, chaque pixel étant configuré pour émettre une onde lumineuse divergente selon un axe d'émission prédéfini, l'onde lumineuse se propageant selon un angle de divergence prédéfini par rapport à l'axe d'émission ;
- l'écran directif est disposé dans le plan focal objet du combineur ;
- le combineur optique est configuré pour recevoir chaque onde lumineuse émise par un pixel et former une onde lumineuse collimatée se propageant vers une position susceptible d'être occupée par la pupille de l'oeil ;
- les axes d'émission respectifs de différents pixels de l'écran directif convergent vers un même point de visée, en aval du combineur ;
- l'image du point de visée, par le combineur, correspond à la position susceptible d'être occupée par la pupille de l'œil.

Selon une possibilité, l'écran comporte un empilement comprenant:

- des guides de lumière, chaque guide de lumière étant couplé à une pluralité de réseaux de diffraction répartis le long du guide de lumière, chaque réseau de diffraction étant électriquement modulable, chaque réseau de diffraction étant configuré pour être modulé électriquement de façon à extraire une lumière se propageant dans le guide de lumière ;
- des électrodes, chaque électrode étant associée à plusieurs réseaux de diffraction respectivement couplés à différents guides de lumière, chaque électrode étant configurée pour moduler chaque réseau de diffraction auquel elle est associée ;

chaque pixel de l'écran correspondant à une association entre une électrode et un réseau de diffraction couplé à un guide de lumière ;
de façon que sous l'effet d'une illumination par une lumière extraite du guide de lumière, chaque pixel est configuré pour émettre une onde lumineuse divergente, se propageant autour d'un axe d'émission du pixel, en formant un cône d'émission, défini par un angle de divergence autour de l'axe d'émission du pixel.

L'écran peut comporter un film holographique, subdivisé en différentes zones élémentaires, chaque zone élémentaire étant associée au réseau de diffraction d'un pixel, et configurée pour émettre l'onde lumineuse divergente, selon l'axe d'émission et l'angle de divergence du pixel, sous l'effet d'une lumière extraite par le réseau de diffraction auquel elle est associée.

Selon un mode de réalisation :

- plusieurs guides de lumière sont reliés à une même source de lumière ;
- un modulateur de lumière s'étend entre la source de lumière et chaque guide de lumière, de façon à moduler une intensité de la lumière, émise par la source de lumière, alimentant le guide de lumière.

L'écran peut comporter plusieurs sources de lumière, chaque source de lumière étant optiquement reliée à plusieurs guides de lumière. Différentes sources de lumière peuvent être configurées pour émettre une lumière respectivement selon différentes longueurs d'onde.

Les pixels peuvent être agencés selon :

- des lignes, chaque ligne étant définie par un guide de lumière, le guide de lumière s'étendant le long de différents pixels de la ligne ;
- des colonnes, chaque colonne étant définie par une électrode, l'électrode s'étendant le long de différents pixels le long de la colonne.

Selon un mode de réalisation,

- le combineur s'étend autour d'un axe optique;
- les pixels de l'écran sont segmentés en groupes de pixels ;
- les axes d'émission des pixels d'un même groupe de pixels convergent vers un même point de visée associé au groupe de pixels ;
- deux groupes de pixels différents sont associés à deux points de visée différents, au moins un point de visée associé à un groupe de pixel étant distant de l'axe optique.

L'axe optique peut passer par le centre du combineur. L'axe optique peut s'étendre entre le centre du combineur et la position susceptible d'être occupée par la pupille de l'œil.

Selon un mode de réalisation,

- l'écran comporte un premier groupe de pixels, dont les axes d'émission convergent vers un premier point de visée, le premier groupe de pixels étant configuré pour former une première partie d'une image lorsque la pupille de l'œil occupe une première position ;

- l'écran comporte un deuxième groupe de pixels, dont les axes d'émission convergent vers un deuxième point de visée, différent du premier point de visée, le deuxième groupe de pixels étant configuré pour former une deuxième partie de l'image lorsque la pupille de l'œil occupe une deuxième position, décalée angulairement par rapport à la première position.

Selon un mode de réalisation,

- l'écran comporte un premier groupe de pixels, dont les axes d'émission convergent vers un premier point de visée, le premier groupe de pixels étant configuré pour former une une image lorsque la pupille de l'œil occupe une première position ;
- l'écran comporte un deuxième groupe de pixels, dont les axes d'émission convergent vers un deuxième point de visée, différent du premier point de visée, le deuxième groupe de pixels étant configuré pour former l'image lorsque la pupille de l'œil occupe une deuxième position, différente de la première position.

Selon un mode de réalisation,

- les pixels de l'écran sont segmentés en macropixels, les pixels d'un même macropixel étant configurés pour afficher le même contenu ;
- les axes d'émission des pixels d'un même macropixel visent différents points de visée ;
- les axes d'émission respectifs des pixels de différents macropixels convergent vers un même point de visée.

Le combineur est avantageusement un combineur holographique.

Selon une possibilité :

- l'écran émet une lumière selon au moins une bande spectrale d'émission ;
- le combineur holographique est transparent en dehors de la ou de chaque bande spectrale d'émission ;
- le combineur holographique forme une lentille convergente dans la ou chaque bande spectrale d'émission.

Le combineur holographique peut former un réflecteur dans la ou chaque bande spectrale d'émission.

Par onde lumineuse collimatée, on entend une onde lumineuse dont la divergence ou la convergence est suffisamment faible pour que l'onde soit considérée comme formée de faisceaux se propageant parallèlement les uns aux autres. Par divergence ou convergence faible, on entend formant un angle de divergence (ou de convergence) inférieur à 2° ou à 1°.

L'invention sera mieux comprise à la lecture de l'exposé des exemples de réalisation présentés, dans la suite de la description, en lien avec les figures listées ci-dessous.

## FIGURES

La figure 1 représente une configuration de l'art antérieur.

La figure 2A est un schéma optique d'un dispositif selon l'invention.

La figure 2B est un tracé de rayons effectué en prenant en compte le dispositif représenté sur la figure 2A.

La figure 2C montre un exemple de disposition sur le verre d'une lunette.

La figure 3A schématise les caractéristiques angulaires d'émission de pixels d'un écran directif.

La figure 3B montre la structure d'un écran directif.

La figure 4 représente un enregistrement d'un hologramme d'un écran directif.

La figure 5A représente une couche d'un écran directif, dans laquelle des guides de lumière sont formés.

La figure 5B montre une couche d'un écran directif, dans laquelle on forme des réseaux de diffraction électriquement activables, couplés à des électrodes.

La figure 5C montre une couche d'un écran directif comportant des hologrammes préalablement enregistrés.

La figure 5D représente une variante d'un écran directif permettant le recours à différentes sources de lumière, émettant potentiellement dans différentes bandes spectrales.

Les figures 6A à 6F schématisent les différentes couches formant un écran directif.

La figure 7A est un schéma optique d'une lentille convergente.

La figure 7B montre une phase d'enregistrement d'une partie de la lentille holographique.

La figure 7C représente une utilisation de la lentille holographique.

Les figures 8A à 8G montrent une variante permettant de dupliquer une Eye-Box du dispositif.

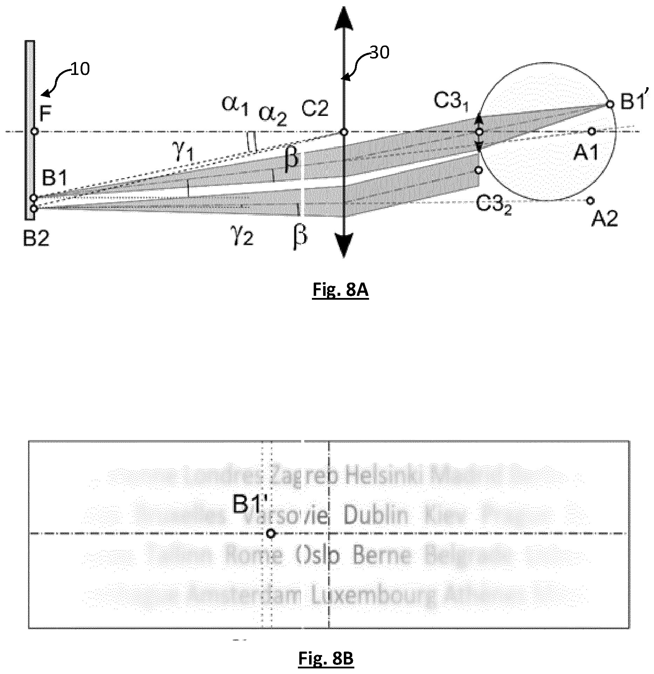

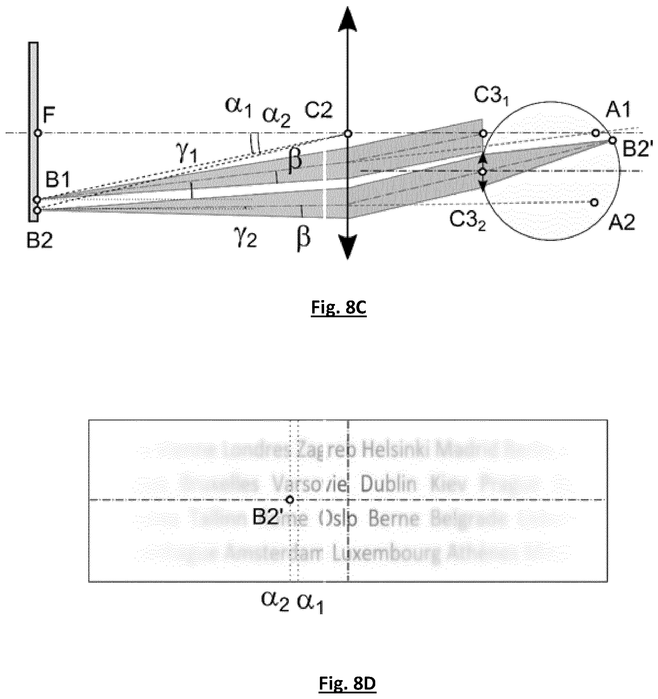

La figure 8A et la figure 8C montrent des configurations dans lesquelles l'œil est respectivement disposé face deux directions angulaires.

La figure 8B et 8D illustrent des images perçues par l'œil respectivement selon les configurations décrites sur les figures 8A et 8C.

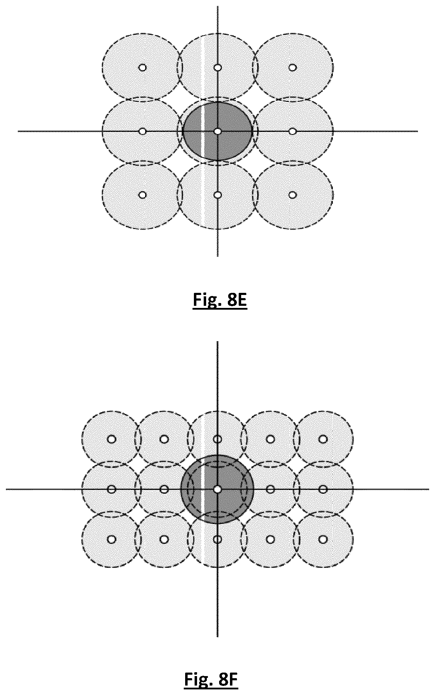

Les figures 8E et 8F montrent des configurations différentes, avec des nombres de duplication différents de la Eye-Box.

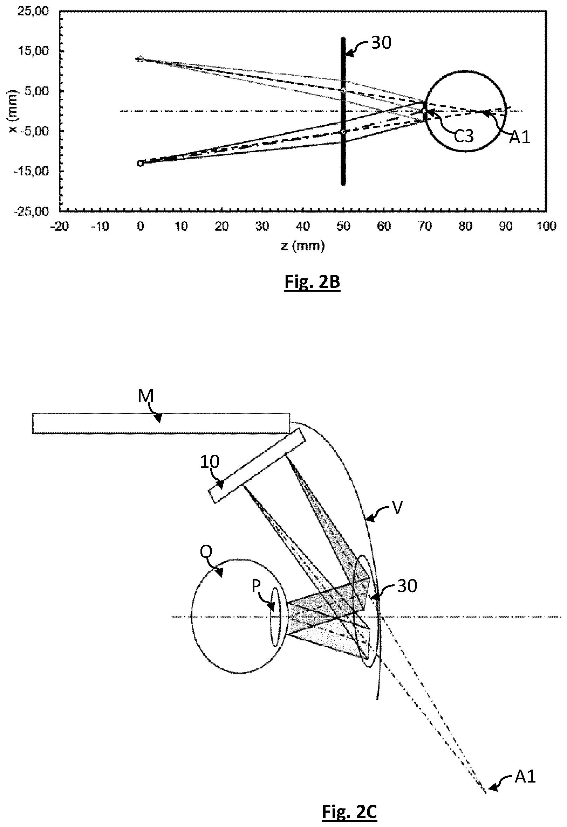

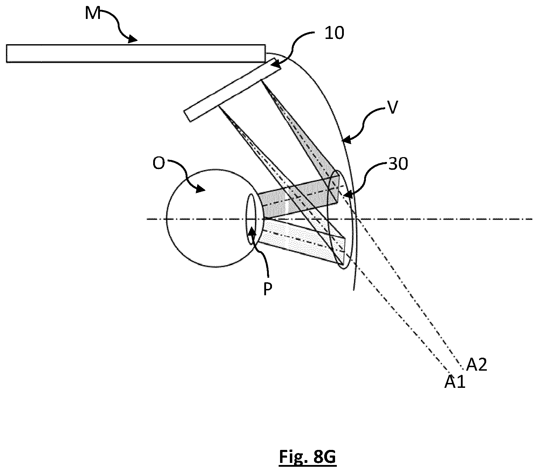

La figure 8G schématise le mode de réalisation décrit en lien avec les figures 8A à 8F, dans une configuration en réflexion, comme décrit en lien avec la figure 2C.

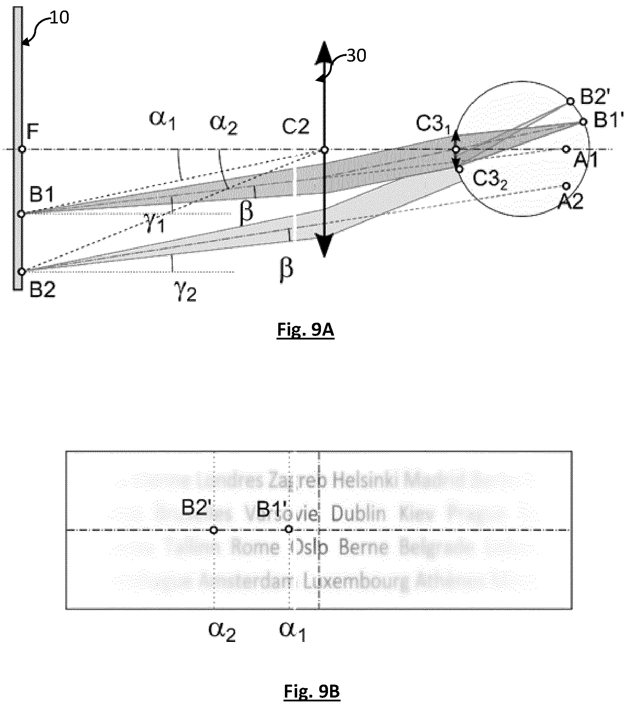

Les figures 9A à 9D montrent une autre variante permettant d'augmente la taille de la Eye-Box.

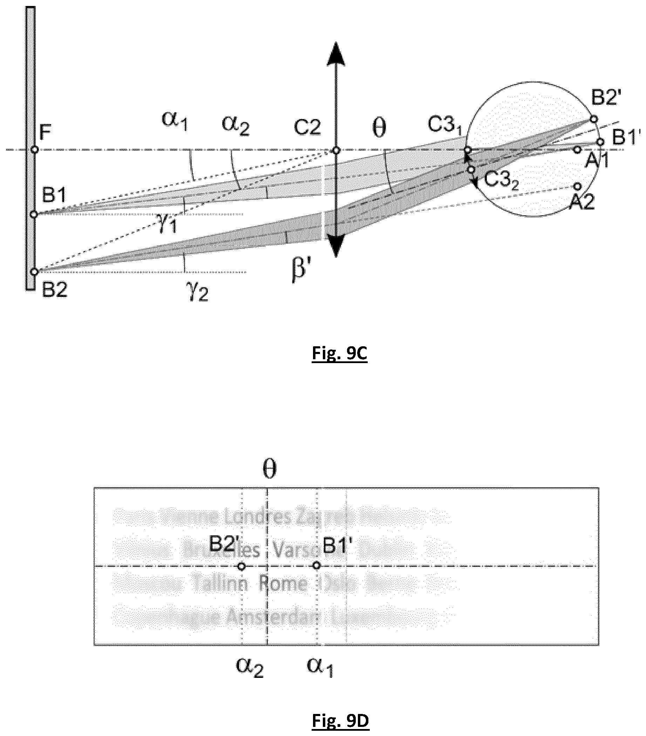

La figure 9A et la figure 9C montrent des configurations dans lesquelles l'œil est respectivement disposé face deux directions angulaires.

La figure 9B et 9D illustrent des images perçues par l'œil respectivement selon les configurations décrites sur les figures 9A et 9C.

## EXPOSE DE MODES DE REALISATION PARTICULIERS

La figure 2A schématise les principaux éléments d'un dispositif 1 selon l'invention. Le dispositif comporte un écran 10, comportant des pixels $10_i$. Sur la figure 2A, le point B1 désigne un pixel. L'écran 10 est un écran directif. Le terme écran directif désigne un écran dont chaque pixel est configuré pour émettre une onde lumineuse divergente selon un axe d'émission, formant un angle d'émission par rapport à une direction normale à l'écran, l'onde lumineuse se propageant selon un angle de divergence par rapport à l'axe d'émission, l'écran étant tel que :

- l'angle de divergence est prédéterminé, de préférence inférieur à 45° ou inférieur à 30° ;
- et/ou les axes d'émission de deux pixels différents sont différents ;
- et/ou les angles de divergence de deux pixels différents sont différents ;
- et/ou au moins un axe d'émission d'un pixel est incliné par rapport à la direction normale à l'écran.

Ainsi, chaque pixel $10_i$ émet une onde lumineuse divergente, dans une bande spectrale d'émission, se propageant selon un axe d'émission $\Delta_i$. L'axe d'émission $\Delta_i$ est incliné d'un angle d'émission $\gamma_i$ par rapport à une direction perpendiculaire à l'écran. Les bandes spectrales d'émission respectives de chaque pixel peuvent être identiques ou différentes les unes des autres.

Le dispositif comporte un combineur 30. Le terme combineur désigne un composant qui combine à la fois une fonction optique de transparence, dans une bande spectrale de transparence, et une fonction optique de renvoi, dans une bande spectrale d'intérêt, de préférence étroite, et éventuellement de mise en forme d'un faisceau optique, généré hors de l'axe de la vision par l'écran. L'axe de vision correspond à un axe centré et perpendiculaire à la pupille de sortie. Le combineur peut associer dans une ou chaque bande spectrale d'intérêt, la fonction optique de type miroir et la fonction de mise en forme de type lentille convergente. En dehors de ces bandes spectrales le composant est transparent, les faisceaux optiques le traverse sans perturbation notable.

La figure 2A schématise un schéma optique « déplié », dans lequel le combineur 30 est représenté fonctionnant en transmission. A partir d'une onde lumineuse incidente divergente, le combineur 30 prend la forme d'une lentille formant une onde lumineuse collimatée, ou pouvant être considérée comme telle, c'est-à-dire faiblement divergente. Par faiblement divergente, on entend une onde dont l'angle de divergence est inférieur à 1°. Cela permet de former, au niveau de l'œil, une image « à grande distance », c'est-à-dire une distance supérieure à 2 m.

Le combineur est configuré pour former, à partir de chaque onde lumineuse émise par un pixel, une onde lumineuse collimatée se propageant vers la pupille de l'œil de l'utilisateur. De préférence, le combineur est un combineur holographique, la fonction de lentille et la fonction miroir étant codées dans un hologramme formé le long du combineur.

Le recours à un combineur holographique est connu de l'homme du métier. Un combineur holographique a l'avantage d'être compact, car formé par une couche mince holographique déposée sur un support, de type verre de lunette. Un combineur holographique est très sélectif en longueur d'onde. L'hologramme est transparent à la majorité du spectre visible, hormis une longueur d'onde spécifique à laquelle il est sensible. La fonction de convergence du combineur, de même que la fonction de déviation angulaire, sont codées dans l'hologramme, comme décrit par la suite.

Le combineur holographique 30 définit un plan focal objet et un plan focal image. Les pixels de l'écran 10 sont disposés dans la plan focal objet du combineur.

Selon le mode de réalisation représenté sur la figure 2A, les axes d'émission de tous les pixels de l'écran convergent vers un même point virtuel A1. Sur la figure 2B, on a représenté les axes d'émission de deux pixels différents. Le point virtuel A1 est tel que son image, par le combineur 30, est positionné à un point C3. Le point C3 correspond à une position à laquelle l'utilisateur place la pupille P de son œil O. Ainsi, le faisceau provenant de chaque pixel est collimaté par le combineur, et dirigé vers le point C3 en étant centré par rapport à ce dernier. On comprend que l'angle d'émission associé à chaque pixel est ajusté de façon à converger vers le point virtuel A1.

Ainsi, chaque pixel $10_i$ de l'écran 10 est configuré pour émettre une onde lumineuse, autour d'un axe d'émission $\Delta_i$ dont l'angle d'émission $\gamma_i$ est tel que l'axe d'émission $\Delta_i$ passe par le point virtuel A1. Il en résulte que les angles d'émission respectifs de différents pixels $10_i$ sont différents les uns des autres et convergent vers le point virtuel A1. Chaque angle d'émission peut être défini par rapport à un axe optique $\Delta_0$, passant par le centre du combineur C2 et par le point C3 préalablement défini. Dans l'exemple représenté, l'axe optique $\Delta_0$ passe par le centre de l'écran, bien que cela ne soit pas nécessaire.

Sur la figure 2A, les notations $wy_1$, $wy_2$, $wy_3$, désignent respectivement les tailles de faisceau de l'onde lumineuse, par rapport à l'axe de propagation du faisceau, depuis l' onde lumineuse émise par le pixel

$10_i$, dans un plan parallèle au plan selon s'étend le combineur, passant par les points B1, C2, et C3. L'écran 10 s'étend selon le plan focal objet du combineur, en étant perpendiculaire à l'axe optique $\Delta_0$. L'onde lumineuse collimatée résultant de chaque pixel $10_i$ atteint le point C3 selon un angle d'inclinaison $\alpha_i$ par rapport à l'axe optique $\Delta_0$. La distance entre le pixel $10_i$ et l'axe optique $\Delta_0$ est notée dy.

L'onde lumineuse collimatée résultant du combineur est focalisée par l'œil O de façon à former un pixel d'une image de l'écran, formée sur la rétine R de l'œil. Le pixel de l'image formée sur la rétine correspond au point B2. La position de B2 est définie par l'angle d'inclinaison $\alpha_i$, ce dernier étant différent pour chaque pixel $10_i$. On comprend que le dispositif permet une formation de l'image formée par l'écran 10, sur la rétine R.

Le combineur permet la génération d'une onde collimatée au niveau de l'œil de sorte que lorsque l'utilisateur regarde au loin un objet (distance œil/objet grande par rapport à la taille de l'œil), par exemple le sommet d'une montagne, il peut également percevoir l'image de l'écran, ce dernier générant des informations de type réalité augmentée, par exemple le nom du sommet et son altitude. La notion de collimation est donc relative. Bien que théoriquement associée à une image placée à l'infini, elle peut également s'appliquer à une image placée à grande distance (typiquement au-delà de 100 fois la taille de l'œil, environ à 2 mètres de l'observateur).

Soit $Z_v$, la distance entre le point virtuel A1 et le point F positionné sur l'écran. Soit f, la distance focale du combineur (distance entre C2 et l'écran).

L'angle d'émission $\gamma_i$ de chaque pixel $10_i$ et l'angle d'inclinaison $\alpha_i$ sont tels que :

$$\gamma_i = \tan^{-1}\left(\frac{dy}{z_v}\right) (1)$$

et

$$\alpha_i = \tan^{-1}\left(\frac{dy}{f}\right) (2)$$

La taille de la eye-box, qui dépend de l'angle de divergence $\beta_i$ de chaque pixel, est telle que :

$$EB = 2 \times f \times \tan(\beta_i) \quad (3)$$

De préférence, chaque pixel de l'écran directif est configuré de façon à avoir le même angle de divergence.

La figure 2C montre une configuration dite repliée, selon laquelle le combineur fait office de réflecteur. Le combineur est intégré au verre V d'une lunette. L'écran 10 est solidaire de la monture M de la lunette. Chaque pixel de l'écran présente un axe d'émission convergeant vers un même point A1. On a représenté les faisceaux collimatés résultant du combineur 30 et se propageant vers la pupille de l'œil

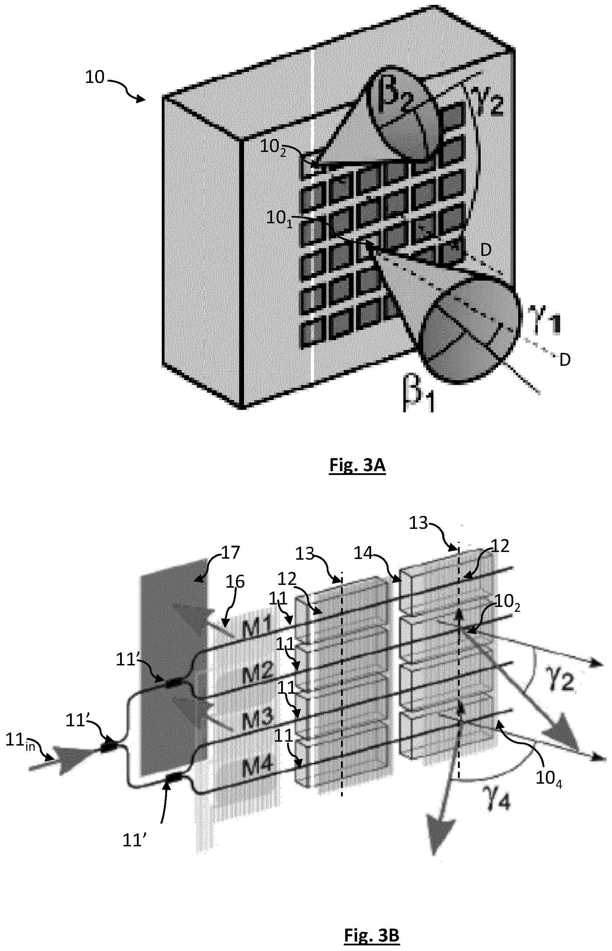

Les figures 3A et 3B montrent le fonctionnement de l'écran directif 10. L'écran directif est formé par plusieurs pixels $10_i$, de préférence agencés selon des lignes et des colonnes. Chaque pixel est configuré pour émettre une onde lumineuse selon un angle d'émission, par rapport à une direction D normale au plan selon lequel s'étend l'écran. Sur la figure 3A, on a représenté :

- un pixel $10_1$, émettant une onde lumineuse divergente se propageant selon un axe de propagation formant un angle d'émission $\gamma_1$ par rapport à la direction D, et formant un cône dont le demi-angle au sommet, dit angle de divergence, est noté $\beta_1$ ;
- un pixel $10_2$, émettant une onde lumineuse divergente se propageant selon un axe de propagation formant un angle d'émission $\gamma_2$ par rapport à la direction D, et formant un angle de divergence $\beta_2$.

La figure 3B schématise une structure de l'écran directif. L'écran directif comporte des guides de lumière 11. Chaque guide de lumière 11 est relié à une source de lumière $11_{in}$. Contrairement à la configuration décrite dans US9632317, la source de lumière $11_{in}$ peut être une source laser, mais également une source non cohérente, par exemple une diode électroluminescente. Dans l'exemple représenté, chaque guide de lumière s'étend selon une ligne, et plus précisément le long de différents pixels de la ligne. Les guides de lumière peuvent par exemple être formés de SIN (nitrure de silicium), déposé dans une couche de $SiO_2$.

L'écran comporte :

- une première couche, dans laquelle sont formés des guides de lumière 11. Les guides de lumière sont configurés pour recevoir la lumière émise par la source de lumière $11_{in}$
- une deuxième couche, dans laquelle sont formés des réseaux de diffraction 12, de telle sorte que chaque réseau de diffraction 12 est couplé avec un guide de lumière 11. Les réseaux de diffraction 12 sont électriquement modulés. Chaque réseau de diffraction 12 correspond à une variation périodique d'indice de réfraction, susceptible d'être modulée électriquement. Les réseaux de diffraction 12 couplés à un même guide de lumière 11 sont espacés les uns des autres le long du guide de lumière, et sont considérés comme ponctuels. Chaque réseau de diffraction 12 peut être formé d'inclusions, définissant un motif périodique, dans de l'oxyde de silicium ($SiO_2$), chaque inclusion étant formée d'un matériau dont l'indice de réfraction est électriquement modulable, par exemple un cristal liquide. Lorsque la longueur d'onde de la lumière est de 532 nm, la période du motif du réseau de diffraction 12 peut être comprise entre 200 nm et 500 nm. Un réseau de diffraction peut s'étendre selon 10 motifs périodiques, et s'étendre ainsi sur une longueur de 2 ou 5 µm.

- une troisième couche, dans laquelle sont formées des électrodes transparentes 13, les électrodes étant configurées pour moduler électriquement l'indice de réfraction d'un matériau formant les réseaux de diffraction. Les électrodes transparentes peuvent être formées d'un matériau conducteur transparent, par exemple ITO (oxyde d'indium étain). Chaque électrode peut ainsi activer un réseau de diffraction sous l'effet de la modulation électrique. Dans l'exemple représenté, les électrodes transparentes s'étendent parallèlement à des colonnes.

- une quatrième couche, dite couche holographique, correspondant à un film holographique 14. Par film holographique, il est entendu un support photosensible susceptible d'enregistrer un hologramme. Le film holographique est supposé suffisamment fin pour être assimilé à la surface d'émission. Le film holographique peut être un photopolymère de type photorésine ou une suspension de composés sensible à la lumière comme un halogénure d'argent.

Les couches sont formées sur un support transparent. Il peut par exemple s'agir d'un support en verre ou en polycarbonate.

Sous l'effet d'une polarisation par une électrode 13, chaque réseau de diffraction ponctuel 12 est activé, au sens où il permet une extraction d'une partie de la lumière se propageant dans un guide de lumière 11 auquel le réseau de diffraction 12 est couplé. La lumière extraite se propage vers le film holographique 14, et plus précisément vers une zone élémentaire $14_i$ du film holographique $14_i$. Sous l'effet de l'illumination, la zone élémentaire du film holographique émet une onde lumineuse selon des caractéristiques angulaires prédéfinies. Par caractéristiques angulaires, on entend un angle d'émission $\gamma_i$ et un angle de divergence $\beta_i$.

Ainsi, chaque pixel $10_i$ de l'écran correspond à une superposition d'un réseau de diffraction ponctuel 12 couplé à un guide de lumière 11, et d'une électrode 13, face à une zone élémentaire $14_i$ du film holographique 14. L'association entre chaque électrode 13 et chaque réseau de diffraction 12 forme une structure d'extraction d'une partie de la lumière se propageant dans un guide de lumière 11.

Dans l'exemple représenté, les guides de lumière 11 sont coplanaires. Il en est de même des électrodes 13. Ainsi, les électrodes 13 sont superposées aux guides de lumière 11. Chaque électrode « croise » plusieurs guides de lumière, de façon à définir plusieurs intersections, chaque intersection correspondant à un pixel de l'écran. Le terme « croiser » est à interpréter comme désignant une superposition d'une électrode et d'un guide de lumière. La position de chaque pixel est définie par le positionnement des guides de lumière et des électrodes. Les caractéristiques angulaires d'émission sont définies par l'hologramme formant la zone élémentaire $14_i$, illuminée par une extraction de la lumière se propageant dans le guide de lumière.

Sur la figure 3B, on a représenté un pixel $10_2$ et un pixel $10_4$. Chaque zone élémentaire de l'hologramme faisant face à ces pixels est respectivement configurée pour émettre une onde lumineuse selon des caractéristiques angulaires prédéfinies, codées dans l'hologramme. Sur la figure 3B, on a représenté les angles d'émission $\gamma_2$ et $\gamma_4$ définis pour les pixels $10_2$ et $10_4$. Les caractéristiques angulaires d'émission peuvent être définies, pour chaque pixel, indépendamment des autres pixels.

Des diviseurs 11' peuvent être disposés, par exemple des jonctions en Y, de façon à répartir la lumière, émise par une même source de lumière $11_{in}$, vers différents guides de lumière 11. Afin de moduler l'intensité de la lumière se propageant dans un guide de lumière, chaque guide de lumière 11 peut être couplé à un modulateur. Sur la figure 3B, on a représenté quatre modulateurs M1, M2, M3 et M4. Chaque modulateur comporte un extracteur 16, configuré pour être activable électriquement, de façon à extraire tout ou partie de la lumière se propageant dans un guide de lumière. Chaque extracteur peut être similaire à un réseau de diffraction 12 tel que précédemment décrit. Lorsqu'un extracteur est activé, la lumière se propageant à travers le guide de lumière 11 est extraite, de préférence vers un absorbeur 17. La présence de l'absorbeur permet de dissiper la lumière extraite, afin d'éviter une propagation d'une lumière parasite à travers l'écran 10. L'utilisation des modulateurs permet d'ajuster l'intensité de pixels de l'écran simultanément activés.

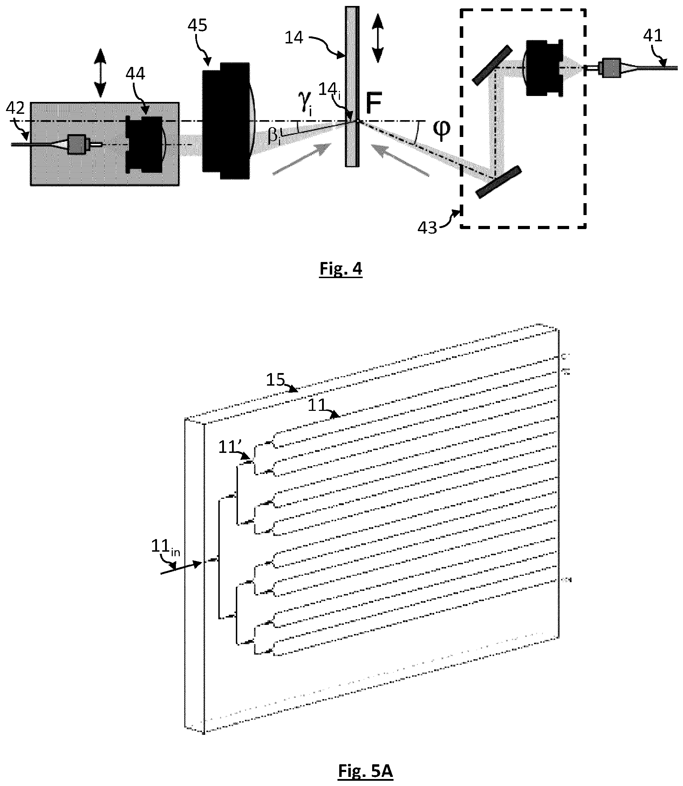

Les caractéristiques angulaires d'émission de chaque pixel $10_i$ sont définis au cours d'une phase préalable d'enregistrement du film holographique 14. De façon connue, un hologramme est formé par une interférence entre deux ondes lumineuses émises par une même source de lumière : une onde lumineuse objet et une onde lumineuse de référence. Les franges d'interférence générées sont mémorisées physiquement ou chimiquement dans le film holographique 14. Sur la figure 4, on a représenté un montage permettant l'enregistrement d'une zone élémentaire $14_i$ du film holographique 14.

Une source de lumière est couplée à deux fibres à l'aide d'un diviseur, de manière à obtenir une fibre formant un faisceau objet 42 et une fibre formant un faisceau de référence 41. La source de lumière a une longueur d'onde proche de celle de la lumière $11_{in}$ à laquelle l'écran 10 est connecté lors de son utilisation. Cette source est typiquement un laser de grande longueur de cohérence (supérieure au mètre).

La fibre formant le faisceau de référence 41 reproduit les conditions d'illumination similaires à celles obtenues par une extraction de la lumière d'un guide de lumière 11 par activation d'un réseau de diffraction 12. Par conditions d'illumination, on entend l'incidence du faisceau, sa taille et sa divergence. Le faisceau de référence 42 est fixe et est formé par un système optique de mise en forme de référence 43.

Le faisceau objet est généré par un système optique de mise en forme objet 44 couplé à une optique de focalisation convergente 45. Cela permet de régler un angle d'incidence $\gamma_i$ et un angle de divergence $\beta_i$ du faisceau objet. L'enregistrement d'un hologramme, dans une zone élémentaire $14_i$, est effectué en exposant simultanément ladite zone élémentaire au faisceau objet et au faisceau de référence. Les différents hologrammes, au niveau de chaque zone élémentaire, sont réalisés en déplaçant le film holographique 14 et en modifiant éventuellement les caractéristiques du faisceau objet, en particulier l'angle d'incidence $\gamma_i$ et l'angle de divergence $\beta_i$. Ainsi, à chaque zone élémentaire $14_i$ est assigné un angle d'incidence $\gamma_i$ et un angle de divergence $\beta_i$, qui correspondent aux angles d'incidence et de divergence du faisceau objet lors de l'enregistrement de l'hologramme.

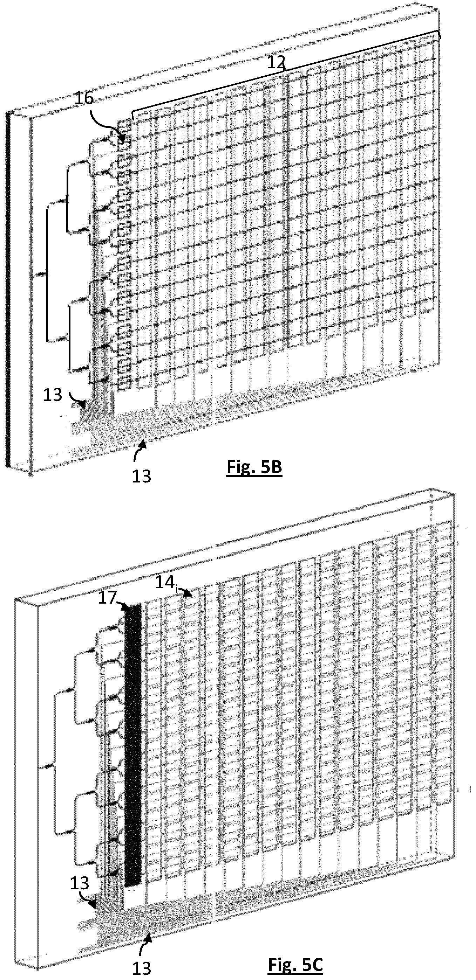

Les figures 5A à 5D schématisent différentes couches précédemment évoquées. Sur la figure 5A, on a représenté une couche structurée, définissant les guides de lumière 11, formée sur un substrat en verre 15. La figure 5B montre une couche d'extraction, formée par les réseaux de diffraction 12, 16 précédemment décrits. La figure 5C montre une couche holographique, comportant les zones élémentaires holographiques $14_i$ ainsi que l'absorbeur 17.

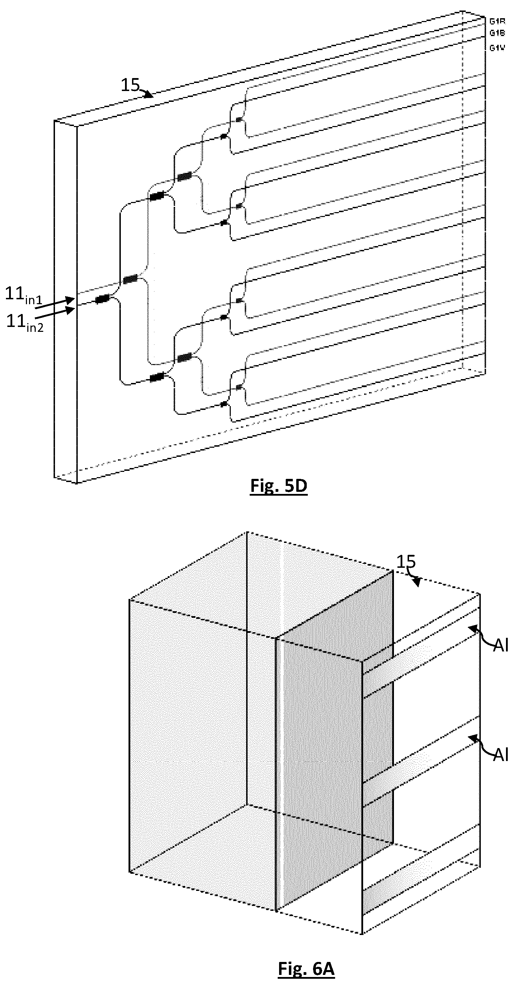

Un avantage de l'écran holographique est de réduire le nombre de sources de lumière par rapport à la configuration décrite dans US9632317. L'écran directif peut être formé d'une seule source de lumière. Il est alors monochrome. L'écran directif peut être formé de plusieurs sources de lumière émettant selon des bandes spectrales différentes. Une telle configuration est représentée sur la figure 5D. Plusieurs guides de lumière peuvent être formés, sur une même couche, de façon à former des réseaux indépendants de guides de lumière. Chaque réseau de guide de lumière est destiné à être couplé optiquement à une source de lumière émettant dans une bande spectrale déterminée. Sur la figure 5D, on a représenté deux réseaux de guide de lumière destinés à être optiquement couplés à deux sources de lumières $11_{in1}$ et $11_{in2}$. Les différents guides de lumière peuvent être réalisés sur le même substrat 15. L'agencement des guides de lumière permet d'éviter les interférences (cross-talk) entre les guides de lumière à chaque intersection.

Les figures 6A à 6F illustrent les étapes de fabrication d'un écran directif 10. Sur la figure 6A, Des bandes de matériau réfléchissant (par exemple un métal comme l'aluminium Al), destinées à faire office de réflecteur, sont déposées sur un substrat 15, en formant des lignes. Les bandes d'aluminium, de largeur 1 $\mu m$, sont espacées de 5 $\mu m$ les unes des autres.

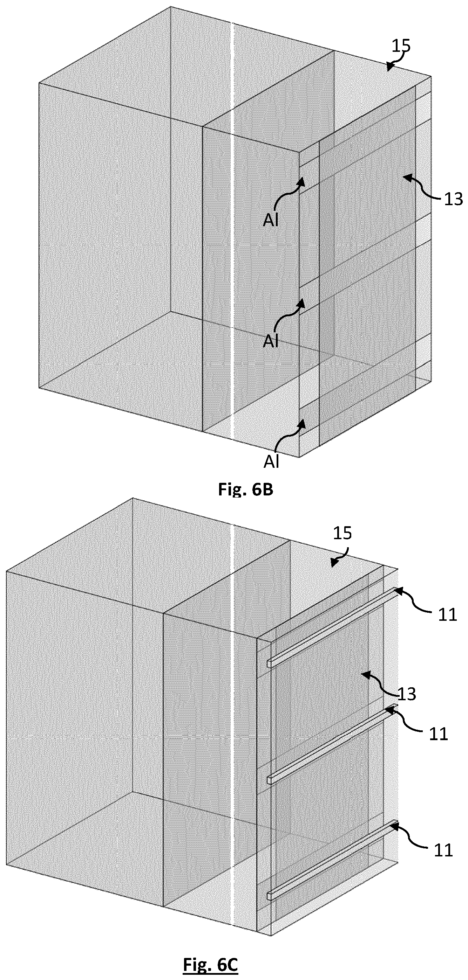

Sur la figure 6B, on a représenté une couche d'électrodes d'adressage 13, sous la forme d'une couche structurée d'ITO (Oxyde d'indium-étain), d'épaisseur 40nm. La couche d'ITO peut faire l'objet d'une structuration, de façon à former des électrodes s'étendant selon des colonnes, perpendiculaires aux lignes.

Sur la figure 6C, on a représenté le dépôt d'une couche de $SiO_2$, dans laquelle des guides de lumière en SiN sont formés. Les guides ont une largeur d'environ 400 nm et une épaisseur comprise entre 100 nm et 400 nm. Le choix de SiN se justifie par ses propriétés de transparence dans le domaine visible.

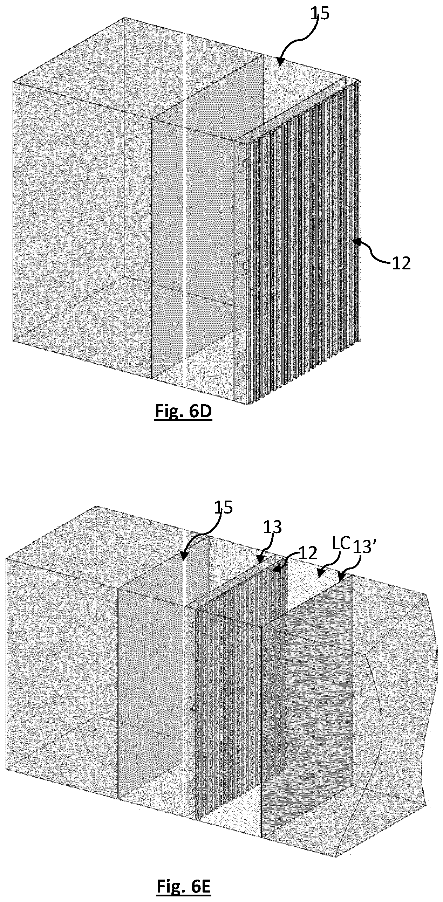

Sur la figure 6D, on a représenté un dépôt d'une couche structurée destinée à former un réseau de diffraction 12. Le réseau de diffraction est de préférence formé dans un matériau simple à structurer, par exemple un matériau de type sol-gel.

Le réseau de diffraction est encapsulé dans une couche de cristal liquide LC, dont l'indice de réfraction peut basculer entre deux valeurs en fonction de la tension appliquée par les électrodes. En fonction de la valeur de l'indice de réfraction, le réseau de diffraction 12 permet une extraction de la lumière se propageant à travers le guide de lumière. Une contre-électrode transparente 13', par exemple en ITO, déposé sur un film transparent 13s (en verre ou en matériau transparent plastique),est disposée sur la couche de cristal liquide. Cf. figure 6E.

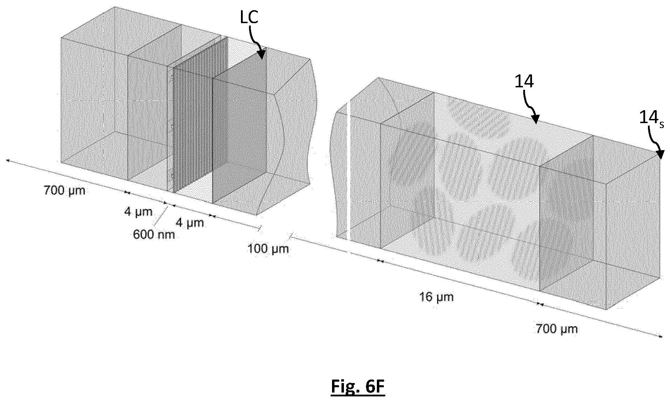

Sur la figure 6F, on a représenté le dépôt d'une couche holographique 14, supportée par un support transparent 14s, contre le film 13s permettant l'encapsulation du cristal liquide. La couche holographique 14 peut être formée d'un photopolymère, d'épaisseur 15 $\mu m$, tandis que le support 14s peut être formé de verre, d'épaisseur 700 $\mu m$. La couche holographique 14 a préalablement fait l'objet d'un enregistrement, comme décrit en lien avec la figure 4.

Sur la figure 6F, on a représenté l'ensemble des couches formant l'écran directif 10. L'épaisseur totale est de l'ordre de 1.5 mm. La surface de chaque pixel peut être de 5 $\mu m$ x 5 $\mu m$ . On peut ainsi former un écran de résolution 1920 x 1080 dont la surface est de 10 mm x 5 mm.

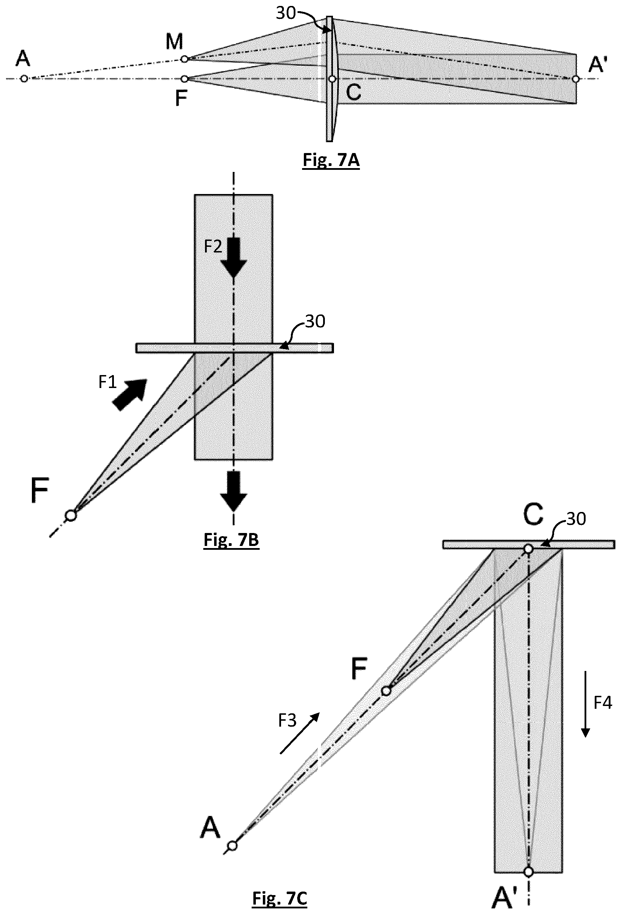

La figure 7A détaille le fonctionnement du combineur holographique 30, qui se comporte de manière équivalente à une lentille convergente. Sur la figure 7A, le combineur conjugue le point A' avec le point A. Les points F et M appartiennent au plan focal objet. Les ondes lumineuses émises par les points F et M sont renvoyées à l'infini par le combineur. Le point F correspond au foyer de la lentille. Le point M est décalé par rapport au point F dans le plan focal objet. En sortie de la lentille, les faisceaux passant respectivement par les points F et M sont collimatés, et déviés angulairement l'un par rapport à l'autre.

La figure 7B illustre une phase d'enregistrement d'un hologramme sur le combineur holographique. Une zone élémentaire du matériau holographique, formant le combineur, est exposée, à un faisceau divergent de référence F1, émis à partir d'un point F, et à un faisceau objet collimaté F2, les deux faisceaux étant émis par une même source de lumière. La source de lumière utilisée est de préférence cohérente, par exemple une source laser, émettant dans une bande spectrale d'enregistrement. L'hologramme résultant des interférences entre les faisceaux F1 et F2 est stocké dans le matériau holographique. La figure 7C montre l'utilisation du combineur holographique : sous l'effet d'une exposition à un faisceau lumineux divergent F3, émis depuis le point F, qui correspond au foyer de la lentille, l'hologramme préalablement stocké réfléchit un faisceau lumineux F4 collimaté. Si le faisceau F3 est émis depuis un point A, distant du foyer F, la lentille réfléchit un faisceau convergent vers un point A'.

Dans l'exemple décrit sur les figures 7B et 7C, le combineur holographique forme une lentille holographique réfléchissant la lumière dans la longueur d'onde des faisceaux F1 et F2. Le combineur holographique ne fonctionne que dans une bande spectrale étroite, qui correspond à la bande spectrale d'enregistrement. En dehors de cette bande spectrale, le combineur holographique transmet la lumière. Le combineur holographique peut être disposé sur un verre d'une lunette ou sur une visière d'un casque de réalité virtuelle.

Selon un exemple de dimensionnement :

- ER (Eye Relief - dégagement oculaire, correspondant à la distance entre le combiner et l'oeil) : 20 mm ;
- distance Zv : 20 mm ;
- distance focale du combineur 30 : 50 mm ;
- Taille écran : 13 mm x 13 mm ;
- champ d'observation : 30°, valeur obtenue en appliquant (2) aux pixels les plus éloignés de l'axe optique.

Chaque ligne ou colonne de l'écran peut comporter 1920 pixels de 7 $\mu$m de côté, ce qui est une dimension réaliste, tout en procurant une résolution spatiale acceptable de l'image formée sur la rétine.

Comme précédemment décrit, en lien avec l'expression (3), la taille de la Eye Box (boîte à oeil) dépend de l'angle de divergence $\beta_i$ assigné à chaque pixel. En prenant en compte un angle de divergence de 3°, la eye box est un carré de 5 mm de côté, ce qui est acceptable.

Les figures 8A à 8E décrivent une variante de la configuration schématisée sur la figure 2A. Selon cette variante :

- les pixels 10i de l'écran 10 sont segmentés en groupes de pixels ;
- les axes d'émission $\Delta_i$ des pixels d'un même groupe de pixels convergent vers un même point de visée associé au groupe de pixels : sur la figure 8A, on a représenté deux points de visée différents A1, A2.
- deux groupes de pixels différents sont associés à deux points de visée différents, au moins un point de visée associé à un groupe de pixel étant distant de l'axe optique.

Selon ce mode de réalisation, on prend en compte un déplacement de l'œil par rapport au dispositif. En tournant, l'œil balaie une plage angulaire large, tout en conservant une bonne qualité de vision.

On considère que l'œil de l'utilisateur forme une image bien définie dans un champ angulaire de 10° autour de l'axe de vision, ce dernier étant perpendiculaire à la pupille et centré par rapport à cette dernière.

L'objectif de cette variante est d'effectuer une duplication de la eye box. Sur la figure 8A, la pupille de l'œil est placée au niveau d'un point $C3_1$. La figure 8B montre le champ visuel correspondant à cette position. On a représenté deux points de visée différents A1 et A2 respectifs, de deux pixels B1 et B2. L'angle d'émission $\gamma_1$ du pixel B1 converge vers le point virtuel A1 décrit en lien avec la figure 2A. L'angle d'émission $\gamma_2$ du pixel B2 converge vers un point virtuel A2, distinct du point A1. Sur la figure 8A, on a représenté le schéma de propagation des faisceaux à partir des deux pixels B1 et B2.

La position spatiale des pixels sur l'écran fixe les angles $\alpha_1$ et $\alpha_2$ suivant (2)

$$\alpha_1 = \tan^{-1}\left(\frac{dy_1}{f}\right) \text{ et } \alpha_2 = \tan^{-1}\left(\frac{dy_2}{f}\right)$$

Où $dy_1$ et $dy_2$ sont les distances entre les pixels et l'axe optique défini par le combineur.

Les deux pixels B1 et B2 sont voisins sur l'écran, avec des écarts de distances de quelques dizaines de micron, on a $\alpha_1 \sim \alpha_2$. Les axes d'émission des deux pixels sont différents : Leurs angles d'émission $\gamma_1$ et $\gamma_2$ respectifs sont définis de façon que le pixel B1 cible le point A1 et le pixel B2 cible le point A2.

On a :

$$\gamma_1 = \tan^{-1}\left(\frac{hy_1}{Zv_1}\right) \text{ et } \gamma_2 = \tan^{-1}\left(\frac{hy_2}{Zv_2}\right)$$

$hy_1$ et $hy_2$ sont les distances, considérées dans le plan du combineur, entre le pixel et son point de visée. $Zv_1$ et $Zv_2$ sont les distances selon l'axe optique, entre le point focal et les points A1 et A2.

Pour le pixel B1, le point visé A1 est sur l'axe optique du combineur. On a donc $hy_1 = dy_1$.

Pour le pixel B2, le point visé A2 n'est pas sur l'axe optique du combineur : $hy_2 \sim 0$.

Selon ce mode de réalisation, chaque pixel $B_i$ d'un même groupe de pixels cible un point $A_i$ dont l'image, par le combineur, est un point $C3_i$ correspondant à une position potentielle de la pupille de l'utilisateur. L'index i est un entier variant entre 1 et I, I correspondant au nombre de duplications de la Eye Box.

Les pixels B1 et B2 ont le même contenu et forment un « macropixel ». Un macropixel est un groupe de pixels de même contenu et visant des points de visée différents, de façon que les pixels du macropixel contribuent à former une même image en différentes positions de la rétine respectivement. Chaque pixel d'un macro-

pixel est destiné à former un même pixel image sur chaque image formée au niveau de la rétine.

La figure 8B montre un exemple de champ visuel d'une image projetée dans l'œil. Dans cet exemple, l'image comporte liste de noms de capitales européennes. L'image produite par le pixel B1 se situe au point B1' à la coordonnée angulaire $\alpha_1$. On a représenté sur cette image un rendu fovéal selon lequel au-delà d'un angle d'environ 5°, l'image projeté sur la rétine est perçue par le cerveau avec une basse résolution. L'image émise par le pixel B2 n'entre pas dans l'œil, ou que très partiellement. Le point B2' n'a donc pas été représenté sur la figure 8B.

La figure 8C montre le même dispositif que discuté en lien avec les figures 8A et 8B. La position de l'œil correspond au point C3$_2$. Cela peut être dû au fait que le système optique est utilisé par un autre utilisateur dont la distance interpupillaire est différente. Cela peut aussi être dû à un mouvement du dispositif sur la tête de l'utilisateur.

La figure 8D montre un exemple de champ visuel d'une image projetée dans l'œil lorsque la position de la pupille correspond au point C3$_2$. Le signal issu du pixel B1 n'entre plus dans l'œil. Le signal issu du pixel B2 entre dans l'œil et produit un pixel image B2' localisé à l'angle $\alpha_2$ du champ visuel. Comme $\alpha_1 \sim \alpha_2$ et que ce principe de duplication des pixels est reproduit sur tout l'écran, l'image perçue par l'observateur ne change pas ou bien de manière imperceptible.

Selon cette variante, l'écran est recouvert de pixels partiellement redondants, formant les groupes de pixels précédemment évoqués. Les pixels d'un même groupe de pixels ciblent un même point Ai, ce qui permet de définir une position de pupille C3$_i$. Les pixels des différents groupes de pixels ciblent différents points Ai, ce qui permet de définir différentes positions de pupille C3$_i$.

Les pixels sont configurés de telle sorte que l'image formée au point C3$_2$ soit une réplique de l'image formée dans la boite à œil centrée autour du point C3$_1$. Ainsi, l'œil peut se déplacer du point C3$_1$ vers le point C3$_2$ en percevant la même image. Autrement dit, les différents groupes de pixels, visant respectivement différents points de visée, sont configurés pour former la même image. Selon ce mode de réalisation, l'utilisateur perçoit la même image lorsque sa pupille occupe la première position C3$_1$ ou lorsque sa pupille occupe la deuxième position C3$_2$.

Plus la redondance est élevée, plus la résolution de l'image est basse mais meilleur est le confort de réglage du système optique grâce aux nombreuses duplications de la Eye Box. Les figures 8E et 8F représentent les distributions d'EB (Eye Box) dans le plan de la pupille d'entrée de l'œil. Le choix du nombre de réplications de la EB va dépendre du choix de divergence β des faisceaux qui est imposée par un critère de conservation d'énergie dans le système optique.

Sur la figure 8E, la valeur de β élevée qui permet d'avoir une EB (en pointillé gris clair) légèrement supérieure à la taille de la pupille de l'œil (représenté en gris foncée). Dans ce cas on a fait le choix de dupliquer la EB en 3x3. Par rapport à un écran sans réplication de la EB on a une perte de résolution d'image d'un facteur 9.

Sur la figure 8F, la taille de la EB est légèrement inférieure à la taille de pupille de l'œil. On a fait le choix d'une réplication privilégiant la direction horizontale (choix cohérent avec la morphologie humaine). On a une duplication en 5x3, soit une perte de résolution d'un facteur 15 par rapport à une image formée avec un écran sans réplication de la EB.

La figure 8G illustre une configuration repliée, de façon analogue à la figure 2C. Sur la figure 8G, on a représenté des faisceaux convergents vers deux points différents de l'oeil.

Les figures 9A à 9D illustrent une autre variante. Sur les figure 9A et 9C, on a représenté le schéma de propagation des faisceaux à partir de deux pixels B1 et B2. On a adopté les mêmes notations que sur les figures 8A et 8C. On a représenté deux points de visée différents A1 et A2 respectifs, des deux pixels B1 et B2. L'image produite par le pixel B1 se situe au point B1' à la coordonnée angulaire $\alpha_1$. L'image produite par le pixel B2 se situe au point B2' à la coordonnée angulaire $\alpha_2$. Contrairement au cas précédent, les positions de ces pixels sont différenciées si bien que les angles $\alpha_1$ et $\alpha_2$ de projection de pixels images dans l'œil sont différents.

Sur l'image formée sur la rétine, le pixel B1 forme un pixel image B1' à la limite du champ angulaire de 10° (angle apparent $\alpha$ égal à 10°). Pour visualiser les pixels de l'image affichée par l'écran au-delà du point B1', par exemple le pixel image situé au point B2' l'utilisateur tourne son œil d'un angle $\theta$ : cf. figure 9C. Ainsi, le centre de la pupille n'est plus le point C3$_1$, mais se déplace vers le point C3$_2$. L'angle d'émission du pixel B2 est déterminé de façon à viser non pas le point A1, mais le point A2, déterminé pour permettre une continuité entre l'angle de vue de l'image et l'axe de la pupille de l'utilisateur. Un tel mode de réalisation permet de former une image « grand angle » sur l'écran, que l'utilisateur peut suivre en tournant son oeil. Les points visés par les pixels de l'écran sont définis de manière à permettre une rotation progressive de la pupille de l'utilisateur.

L'angle $\alpha_2$ cible une position angulaire dans le champ visuel qui est au-delà de la zone fovéale : l'œil ne peut la percevoir avec une bonne résolution lorsque la pupille se situe au niveau du point C3$_1$. L'angle $\alpha_1$ cible une position angulaire dans le champ visuel qui est en périphérie de la zone fovéale : l'œil la perçoit avec une résolution satisfaisante.

Sur la figure 9A, la pupille de l'œil est disposée en un point C3$_1$ situé sur l'axe optique. Sur la figure 9C, la pupille de l'œil est disposée en un point C3$_2$ décalé angulairement de l'axe optique selon un angle $\theta$.

Si le faisceau issu du pixel B2 passait par le point C3$_1$, le pixel image produit B2' serait rendu avec une bonne efficacité en terme d'énergie. Mais cela serait peu productif car l'œil ne percevrait pas ce pixel avec une bonne résolution.

Pour avoir une amélioration de la résolution à cet angle de vision $\alpha_2$, l'œil va naturellement orienter son axe du regard vers cette direction angulaire. On a une rotation de l'œil dans son orbite et donc un déplacement spatial de la pupille. Avec ce déplacement, le centre de la pupille de l'œil se décale du point $C3_1$ vers le point $C3_2$.

Selon cette variante :

- L'écran comporte un premier groupe de pixels, similaires au pixel B1, dont les axes d'émission convergent vers le premier point virtuel A1. Le premier groupe de pixel permet de former une première partie de l'image dans la boite à œil centrée autour du point $C3_1$. Cf. figure 9B.
- L'écran comporte un deuxième groupe de pixels, similaires au pixel B2, dont les axes d'émission convergent vers le deuxième point virtuel A2. Le deuxième groupe de pixel permet de former une deuxième partie de l'image lorsque la pupille est centrée autour du point $C3_2$ : Cf. figure 9D

Selon ce mode de réalisation, l'utilisateur perçoit la première partie de l'image lorsque sa pupille occupe une première position (point $C3_1$), et la deuxième partie de l'image lorsque sa pupille occupe la deuxième position (point $C3_2$).

La première partie de l'image et la deuxième partie de l'image sont complémentaires : elles correspondent à deux parties différentes d'une image, en grand champ, affichée par le dispositif. Contrairement au mode de réalisation décrit en lien avec les figures 8A à 8G, il ne s'agit pas de dupliquer la Eye Box, mais de l'étendre spatialement.

Ce mode de réalisation permet une observation de l'image tout en effectuant une rotation de l'œil. On utilise le fait que l'acuité visuelle est optimale dans une région centrale de la rétine, appelée la fovéa. Pour couvrir l'ensemble de l'image, l'œil tourne de façon qu'à deux positions angulaires différentes, la fovéa perçoit deux parties différentes de l'image projetée par l'écran.

Une telle variante permet de former une première partie de l'image autour du point $C3_1$, et une deuxième partie de l'image, décalée angulairement, autour du point $C3_2$. L'œil peut percevoir chaque partie de l'image sous l'effet d'une rotation. Cette variante peut être généralisée à n points de visée différents, n étant supérieur ou égal à 2.

L'invention pourra être intégrée à une lunette, ou à une visière, ou à un casque de réalité virtuelle.

## Revendications

**1.** Dispositif (1) de projection d'une image sur un œil (O), le dispositif comportant :

- un émetteur de lumière, configuré pour émettre des ondes lumineuses respectivement selon différents axes d'émission ; - l'émetteur de lumière comporte un écran directif (10), comprenant différents pixels (10i), chaque pixel étant configuré pour émettre une onde lumineuse divergente selon un axe d'émission prédéfini, l'onde lumineuse se propageant selon un angle de divergence ($\beta i$), prédéfini, par rapport à l'axe d'émission ;
- un combineur optique (30), optiquement couplé à l'émetteur de lumière, et configuré pour former, à partir de chaque onde lumineuse émise par l'émetteur de lumière, une onde lumineuse collimatée se propageant vers la pupille (P) de l'œil ;

le dispositif étant **caractérisé en ce que** :

- le combineur présente un plan focal objet ;
- l'écran directif est disposé dans le plan focal objet du combineur ;
- le combineur optique est configuré pour recevoir chaque onde lumineuse émise par un pixel et former une onde lumineuse collimatée se propageant vers une position susceptible d'être occupée par la pupille de l'oeil ;
- les axes d'émission respectifs de différents pixels de l'écran directif convergent vers un même point de visée, en aval du combineur ;
- l'image du point de visée, par le combineur, correspond à la position susceptible d'être occupée par la pupille de l'œil.

**2.** Dispositif selon la revendication 1 dans lequel l'écran comporte un empilement comprenant:

- des guides de lumière (11), chaque guide de lumière étant couplé à une pluralité de réseaux de diffraction (12), répartis le long du guide de lumière, chaque réseau de diffraction étant électriquement modulable, chaque réseau de diffraction (12) étant configuré pour être modulé électriquement de façon à extraire une lumière se propageant dans le guide de lumière ;
- des électrodes (13), chaque électrode étant associée à plusieurs réseaux de diffraction (12) respectivement couplés à différents guides de lumière, chaque électrode étant configurée pour moduler chaque réseau de diffraction auquel elle est associée ;

chaque pixel de l'écran correspondant à une association entre une électrode et un réseau de diffraction couplé à un guide de lumière ;

de façon que sous l'effet d'une illumination par une lumière extraite du guide de lumière, chaque pixel est configuré pour émettre une onde lumineuse divergente, se propageant autour d'un axe d'émission du pixel, en formant un cône d'émission, défini par un angle de divergence autour de l'axe d'émission du pixel.

3. Dispositif selon la revendication 2, dans lequel l'écran comporte un film holographique (14), subdivisé en différentes zones élémentaires, chaque zone élémentaire étant associée au réseau de diffraction (12) d'un pixel, et configurée pour émettre l'onde lumineuse divergente, selon l'axe d'émission et l'angle de divergence du pixel, sous l'effet d'une lumière extraite par le réseau de diffraction auquel elle est associée.

4. Dispositif selon l'une quelconque des revendications 2 ou 3, dans lequel :

   - plusieurs guides de lumière sont reliés à une même source de lumière ;
   - un modulateur de lumière s'étend entre la source de lumière et chaque guide de lumière, de façon à moduler une intensité de la lumière, émise par la source de lumière, alimentant le guide de lumière.

5. Dispositif selon l'une quelconque des revendications 2 à 4, comportant plusieurs sources de lumière, chaque source de lumière étant optiquement reliée à plusieurs guides de lumière.

6. Dispositif selon la revendication 5, dans lequel différentes sources de lumière sont configurées pour émettre une lumière respectivement selon différentes longueurs d'onde.

7. Dispositif selon l'une quelconque des revendications 2 à 6, dans lesquels les pixels sont agencés selon :

   - des lignes, chaque ligne étant définie par un guide de lumière, le guide de lumière s'étendant le long de différents pixels de la ligne ;
   - des colonnes, chaque colonne étant définie par une électrode, l'électrode s'étendant le long de différents pixels le long de la colonne.

8. Dispositif selon l'une quelconque des revendications précédentes, dans lequel :

   - le combineur s'étend autour d'un axe optique ($\Delta_0$);
   - les pixels de l'écran sont segmentés en groupes de pixels ;
   - les axes d'émission des pixels d'un même groupe de pixels convergent vers un même point de visée associé au groupe de pixels ;
   - deux groupes de pixels différents sont associés à deux points de visée différents, au moins un point de visée associé à un groupe de pixel étant distant de l'axe optique.

9. Dispositif selon la revendication 8, dans lequel :

   - l'écran comporte un premier groupe de pixels, dont les axes d'émission convergent vers un premier point de visée, le premier groupe de pixels étant configuré pour former une première partie d'une image lorsque la pupille de l'œil occupe une première position ;
   - l'écran comporte un deuxième groupe de pixels, dont les axes d'émission convergent vers un deuxième point de visée, différent du premier point de visée, le deuxième groupe de pixels étant configuré pour former une deuxième partie de l'image lorsque la pupille de l'œil occupe une deuxième position, décalée angulairement par rapport à la première position.

10. Dispositif selon la revendication 8, dans lequel :

    - l'écran comporte un premier groupe de pixels, dont les axes d'émission convergent vers un premier point de visée, le premier groupe de pixels étant configuré pour former une une image lorsque la pupille de l'œil occupe une première position ;
    - l'écran comporte un deuxième groupe de pixels, dont les axes d'émission convergent vers un deuxième point de visée, différent du premier point de visée, le deuxième groupe de pixels étant configuré pour former l'image lorsque la pupille de l'œil occupe une deuxième position, différente de la première position.

11. Dispositif selon la revendication 10, dans lequel :

    - les pixels de l'écran sont segmentés en macropixels, les pixels d'un même macropixel étant configurés pour afficher le même contenu ;
    - les axes d'émission des pixels d'un même macropixel visent différents points de visée.

12. Dispositif selon l'une quelconque des revendications précédentes, dans lequel le combineur est un combineur holographique.

13. Dispositif selon la revendication 12, dans lequel :

    - l'écran émet une lumière selon au moins une bande spectrale d'émission ;
    - le combineur holographique est transparent en dehors de la ou de chaque bande spectrale d'émission ;
    - le combineur holographique forme une lentille convergente dans la ou chaque bande spectrale d'émission.

**14.** Dispositif selon la revendication 13, dans lequel le combineur holographique forme un réflecteur dans la ou chaque bande spectrale d'émission.

**Patentansprüche**

**1.** Vorrichtung (1) zum Projizieren eines Bildes auf ein Auge (O), die Vorrichtung umfassend:

- einen Lichtemitter, der dazu ausgestaltet ist, Lichtwellen jeweils gemäß verschiedenen Emissionsachsen zu emittieren;
- wobei der Lichtemitter einen richtenden Schirm (10) umfasst, der verschiedene Pixel (10i) beinhaltet, wobei jedes Pixel dazu ausgestaltet ist, eine divergente Lichtwelle entlang einer vorgegebenen Emissionsachse zu emittieren, wobei sich die Lichtwelle gemäß einem vorgegebenen Divergenzwinkel ($\beta$i) in Bezug auf die Emissionsachse ausbreitet;
- einen optischen Kombinator (30), der mit dem Lichtemitter optisch gekoppelt ist und dazu ausgestaltet ist, ausgehend von jeder von dem Lichtemitter emittierten Lichtwelle eine kollimierte Lichtwelle zu bilden, die sich zu der Pupille (P) des Auges hin ausbreitet;

wobei die Vorrichtung **dadurch gekennzeichnet ist, dass**:

- der Kombinator eine Objektbrennebene aufweist;
- der richtende Schirm in der Objektbrennebene des Kombinators angeordnet ist;
- der optische Kombinator dazu ausgestaltet ist, jede von einem Pixel emittierte Lichtwelle zu empfangen und eine kollimierte Lichtwelle zu bilden, die sich zu einer Position hin ausbreitet, die von der Pupille des Auges eingenommen werden kann;
- die jeweiligen Emissionsachsen von verschiedenen Pixeln des richtenden Schirms zu einem selben Zielpunkt, stromab des Kombinators, konvergieren;
- das Bild des Zielpunkts, durch den Kombinator, der Position entspricht, die von der Pupille des Auges eingenommen werden kann.

**2.** Vorrichtung nach Anspruch 1, wobei der Schirm einen Stapel umfasst, der aufweist:

- Lichtleiter (11), wobei jeder Lichtleiter mit einer Mehrzahl von Beugungsgittern (12) gekoppelt ist, die entlang des Lichtleiters verteilt sind, wobei jedes Beugungsgitter elektrisch modulierbar ist, wobei jedes Beugungsgitter (12) dazu ausgestaltet ist, elektrisch so moduliert zu werden, dass ein Licht ausgekoppelt wird, das sich in dem Lichtleiter ausbreitet;
- Elektroden (13), wobei jede Elektrode mehreren Beugungsgittern (12) zugeordnet ist, die jeweils mit verschiedenen Lichtleitern gekoppelt sind, wobei jede Elektrode dazu ausgestaltet ist, jedes Beugungsgitter, dem sie zugeordnet ist, zu modulieren;
wobei jedes Pixel des Schirms einer Zuordnung zwischen einer Elektrode und einem mit einem Lichtleiter gekoppelten Beugungsgitter entspricht;
so dass unter der Wirkung einer Beleuchtung durch ein aus dem Lichtleiter ausgekoppeltes Licht jedes Pixel dazu ausgestaltet ist, eine divergente Lichtwelle zu emittieren, die sich um eine Emissionsachse des Pixels herum unter Bildung eines Emissionskegels ausbreitet, der durch einen Divergenzwinkel um die Emissionsachse des Pixels herum definiert ist.

**3.** Vorrichtung nach Anspruch 2, wobei der Schirm einen holografischen Film (14) umfasst, der in verschiedene elementare Bereiche unterteilt ist, wobei jeder elementare Bereich dem Beugungsgitter (12) eines Pixels zugeordnet ist und dazu ausgestaltet ist, die divergente Lichtwelle gemäß der Emissionsachse und dem Divergenzwinkel des Pixels unter der Wirkung eines von dem Beugungsgitter, dem er zugeordnet ist, ausgekoppelten Lichts zu emittieren.

**4.** Vorrichtung nach einem der Ansprüche 2 oder 3, wobei:

- mehrere Lichtleiter mit einer selben Lichtquelle verbunden sind;
- ein Lichtmodulator sich zwischen der Lichtquelle und jedem Lichtleiter erstreckt, so dass eine Intensität des von der Lichtquelle emittierten Lichts, das dem Lichtleiter zugeführt wird, moduliert wird.

**5.** Vorrichtung nach einem der Ansprüche 2 bis 4, die mehrere Lichtquellen umfasst, wobei jede Lichtquelle mit mehreren Lichtleitern optisch verbunden ist.

**6.** Vorrichtung nach Anspruch 5, wobei verschiedene Lichtquellen dazu ausgestaltet sind, ein Licht jeweils gemäß verschiedenen Wellenlängen zu emittieren.

**7.** Vorrichtung nach einem der Ansprüche 2 bis 6, wobei die Pixel angeordnet sind in:

- Zeilen, wobei jede Zeile durch einen Lichtleiter definiert wird, wobei sich der Lichtleiter entlang von verschiedenen Pixeln der Zeile erstreckt;
- Spalten, wobei jede Spalte durch eine Elektrode definiert wird, wobei sich die Elektrode entlang von verschiedenen Pixeln entlang der Spalte erstreckt.

8. Vorrichtung nach einem der vorhergehenden Ansprüche, wobei:

   - der Kombinator sich um eine optische Achse ($\Delta_0$) erstreckt;
   - die Pixel des Schirms in Pixelgruppen segmentiert sind;
   - die Emissionsachsen der Pixel einer selben Gruppe von Pixeln zu einem selben Zielpunkt, der der Gruppe von Pixeln zugeordnet ist, konvergieren;
   - zwei verschiedene Gruppen von Pixeln zwei verschiedenen Zielpunkten zugeordnet sind, wobei mindestens ein Zielpunkt, der einer Gruppe von Pixeln zugeordnet ist, von der optischen Achse entfernt ist.

9. Vorrichtung nach Anspruch 8, wobei:

   - der Schirm eine erste Gruppe von Pixeln umfasst, deren Emissionsachsen zu einem ersten Zielpunkt konvergieren, wobei die erste Gruppe von Pixeln dazu ausgestaltet ist, einen ersten Teil eines Bildes zu bilden, wenn die Pupille des Auges eine erste Position einnimmt;
   - der Schirm eine zweite Gruppe von Pixeln umfasst, deren Emissionsachsen zu einem zweiten Zielpunkt konvergieren, der von dem ersten Zielpunkt verschieden ist, wobei die zweite Gruppe von Pixeln dazu ausgestaltet ist, einen zweiten Teil des Bildes zu bilden, wenn die Pupille des Auges eine zweite Position einnimmt, die in Bezug auf die erste Position winklig versetzt ist.

10. Vorrichtung nach Anspruch 8, wobei:

   - der Schirm eine erste Gruppe von Pixeln umfasst, deren Emissionsachsen zu einem ersten Zielpunkt konvergieren, wobei die erste Gruppe von Pixeln dazu ausgestaltet ist, ein Bild zu bilden, wenn die Pupille des Auges eine erste Position einnimmt;
   - der Schirm eine zweite Gruppe von Pixeln umfasst, deren Emissionsachsen zu einem zweiten Zielpunkt konvergieren, der von dem ersten Zielpunkt verschieden ist, wobei die zweite Gruppe von Pixeln dazu ausgestaltet ist, das Bild zu bilden, wenn die Pupille des Auges eine zweite Position einnimmt, die von der ersten Position verschieden ist.

11. Vorrichtung nach Anspruch 10, wobei:

   - die Pixel des Schirms in Makropixel segmentiert sind, wobei die Pixel eines selben Makropixels dazu ausgestaltet sind, denselben Inhalt anzuzeigen;
   - die Emissionsachsen der Pixel eines selben Makropixels verschiedene Zielpunkte anvisieren.

12. Vorrichtung nach einem der vorhergehenden Ansprüche, wobei der Kombinator ein holografischer Kombinator ist.

13. Vorrichtung nach Anspruch 12, wobei:

   - der Schirm ein Licht gemäß mindestens einem Emissionsspektralband emittiert;
   - der holografische Kombinator außerhalb des oder jedes Emissionsspektralbandes transparent ist;
   - der holografische Kombinator eine konvergente Linse in dem oder jedem Emissionsspektralband bildet.

14. Vorrichtung nach Anspruch 13, wobei der holografische Kombinator einen Reflektor in dem oder jedem Emissionsspektralband bildet.

**Claims**

1. Device (1) for projecting an image onto an eye (O), the device comprising:

   - a light emitter, configured to emit light waves along various respective emission axes;
   - the light emitter comprises a directional screen (10), comprising various pixels (10i), each pixel being configured to emit a divergent light wave along a predefined emission axis, the light wave propagating such as to make a predefined divergence angle ($\beta_i$) to the emission axis;
   - an optical combiner (30), optically coupled to the light emitter, and configured to form, from each light wave emitted by the light emitter, a collimated light wave that propagates towards the pupil (P) of the eye;

   the device being **characterized in that**:

   - the combiner has an object focal plane;
   - the directional screen is placed in the object focal plane of the combiner;
   - the optical combiner is configured to receive each light wave emitted by a pixel and to form a collimated light wave that propagates towards a position likely to be occupied by the pupil of the eye;
   - the respective emission axes of various pixels of the directional screen converge to the same target point, downstream of the combiner;
- the image of the target point, formed by the combiner, corresponds to the position likely to be occupied by the pupil of the eye.

2. Device according to Claim 1, wherein the screen comprises a stack comprising:

- light guides (11), each light guide being coupled to a plurality of diffraction gratings (12), which are distributed over the length of the light guide, each diffraction grating being electrically modulatable, each diffraction grating (12) being configured to be electrically modulated so as to extract light propagating through the light guide;
- electrodes (13), each electrode being associated with a plurality of diffraction gratings (12) coupled to various light guides, respectively, each electrode being configured to modulate each diffraction grating with which it is associated;

each pixel of the screen corresponding to an association between an electrode and a diffraction grating coupled to a light guide;

so that, under the effect of illumination by light extracted from the light guide, each pixel is configured to emit a divergent light wave that propagates around an emission axis of the pixel, thereby forming an emission cone, defined by a divergence angle around the emission axis of the pixel.

3. Device according to Claim 2, wherein the screen comprises a holographic film (14), which is subdivided into various elementary regions, each elementary region being associated with the diffraction grating (12) of one pixel, and being configured to emit the divergent light wave, along the emission axis and the divergence angle of the pixel, under the effect of light extracted by the diffraction grating with which it is associated.

4. Device according to either one of Claims 2 and 3, wherein:

- a plurality of light guides are connected to the same light source;
- a light modulator lies between the light source and each light guide, so as to modulate an intensity of the light emitted by the light source and fed to the light guide.

5. Device according to any one of Claims 2 to 4, comprising a plurality of light sources, each light source being optically connected to a plurality of light guides.

6. Device according to Claims 2 to 5, wherein various light sources are configured to emit light at various respective wavelengths.

7. Device according to any one of Claims 2 to 6, wherein the pixels are arranged in:

- rows, each row being defined by one light guide, the light guide extending over the length of various pixels in the row;
- columns, each column being defined by one electrode, the electrode extending over the length of various pixels over the length of the column.

8. Device according to any one of the preceding claims, wherein:

- the combiner extends around an optical axis $(\Delta_0)$;
- the pixels of the screen are segmented into groups of pixels;
- the emission axes of the pixels of a given group of pixels converge to the same target point associated with the group of pixels;
- two different groups of pixels are associated with two different target points, at least one target point associated with a group of pixels being distant from the optical axis.

9. Device according to Claim 8, wherein:

- the screen comprises a first group of pixels, the emission axes of which converge to a first target point, the first group of pixels being configured to form a first portion of an image when the pupil of the eye occupies a first position;
- the screen comprises a second group of pixels, the emission axes of which converge to a second target point, different from the first target point, the second group of pixels being configured to form a second portion of the image when the pupil of the eye occupies a second position, angularly offset from the first position.

10. Device according to Claim 8, wherein:

- the screen comprises a first group of pixels, the emission axes of which converge to a first target point, the first group of pixels being configured to form an image when the pupil of the eye occupies a first position;
- the screen comprises a second group of pixels, the emission axes of which converge to a second target point, different from the first target point, the second group of pixels being configured to form the image when the pupil of the eye occupies a second position, different from the first position.

**11.** Device according to Claim 10, wherein:

- the pixels of the screen are segmented into macro-pixels, the pixels of a given macro-pixel being configured to display the same content;
- the emission axes of the pixels of a given macro-pixel target various target points.

**12.** Device according to any one of the preceding claims, wherein the combiner is a holographic combiner.

**13.** Device according to Claim 12, wherein:

- the screen emits light in at least one emission spectral band;
- the holographic combiner is transparent outside of the or each emission spectral band;
- the holographic combiner forms a convergent lens in the or each emission spectral band.

**14.** Device according to Claim 13, wherein the holographic combiner forms a reflector in the or each emission spectral band.

**Fig. 1**

**Fig. 2A**

**Fig. 2B**

**Fig. 2C**

**Fig. 3A**

**Fig. 3B**

**Fig. 4**

**Fig. 5A**

**Fig. 5B**

**Fig. 5C**

**Fig. 5D**

**Fig. 6A**

**Fig. 6B**

<u>Fig. 6C</u>

**Fig. 6D**

**Fig. 6E**

**Fig. 6F**

**Fig. 7A**

**Fig. 7B**

**Fig. 7C**

**Fig. 8A**

**Fig. 8B**

**Fig. 8C**

**Fig. 8D**

**Fig. 8E**

**Fig. 8F**

**Fig. 8G**

EP 4 394 485 B1

**Fig. 9A**

**Fig. 9B**

31

**Fig. 9C**

**Fig. 9D**

EP 4 394 485 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9632317 B
- WO 2019191778 A
- US 10254547 B
- US 20190285897 A
- US 20180299680 A

**Littérature non-brevet citée dans la description**

- **MARTINEZ**. See-trough holographic retinal projection display concept. *Optica*, October 2018, vol. 5 (10)

33